# EUROPÄISCHE PATENTANMELDUNG

(11) **EP 1 964 880 A1**
(43) Veröffentlichungstag der Anmeldung: **03.09.2008**
(21) Anmeldenummer: 08151724.5
(22) Anmeldetag: 21.02.2008
(51) Int. Cl.: C08K 5/5333

(54) **Halogenfreie, flammgeschützte Polyurethanschaumstoffe**

(30) Priorität: 02.03.2007 DE 102007010160
(71) Anmelder: LANXESS Deutschland GmbH, 51369 Leverkusen (DE)
(72) Erfinder: Hansel, Jan-Gerd, 51069, Köln (DE); Tebbe, Heiko, 41539, Dormagen (DE)

(57) **Zusammenfassung**

Die vorliegende Erfindung betrifft flammgeschützte Polyurethanschaumstoffe, die als Flammschutzmittel halogenfreie, hydroxylgruppenfreie Bisphosphonate enthalten.

## Beschreibung

Die vorliegende Erfindung betrifft flammgeschützte Polyurethanschaumstoffe, die als Flammschutzmittel halogenfreie Bisphosphonate enthalten, sowie ein Verfahren zur Herstellung solcher Schaumstoffe und deren Verwendung.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu ist eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z. B. Melamin, Ammoniumpolyphosphat und Ammoniumsulfat aufgrund von Sedimentation oder Aggregation dosiertechnische Probleme auf, die vielfach Modifikationen der Verschäumanlagen, d. h. aufwändige Umbauten und Anpassungen notwendig machen.

Die häufig eingesetzten Flammschutzmittel Tris(chlorethyl)phosphat, Tris(chlorisopropyl)phosphat und Tris(dichlorisopropyl)phosphat stellen leicht dosierbare Flüssigkeiten dar. Von offenzelligen Polyurethanweichschaumsystemen für die Automobil-Innenausstattung wird jedoch in letzter Zeit immer mehr gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer zu hohen Flüchtigkeit nicht mehr gerecht.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden. Die Automobilindustrie fordert typischerweise, dass das Fogging-Kondensat nach der Methode DIN 75201 B weniger als 1 mg betragen darf.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittel bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Als halogenfreie Flammschutzmittel für Polyurethanschaumstoffe wurden diverse organische Phosphate, wie beispielsweise Diphenylkresylphosphat (EP 0 308 733 B1), und Phosphonate, wie beispielsweise Dimethylpropanphosphonat (DE 44 18 307 A1) oder Ethan-1,2-diphosphon-säuretetramethylester (EP 0 316 737 B1), beschrieben. Allerdings genügen diese Stoffe den oben genannten Anforderungen an geringe VOC bzw. geringes Fogging nur unzureichend oder zeigen keine ausreichende Flammschutzwirkung.

In US 3,830,890 werden 2-Buten-1,4-diphosphonsäuretetraester als Flammschutzmittel für Polyurethanschaumstoffe beschrieben. Die in diesen Substanzen enthaltene C=C-Doppelbindung stellt einen erheblichen Nachteil dar, da sie Zersetzungsreaktionen wie beispielsweise Verfärbung während Herstellung und Nutzung des Schaumstoffes begünstigt.

Zwei Phosphonsäureestergruppen enthaltende Diamine, wie sie in DE 2 427 090 (= US 4,028,306) als Flammschutzmittel zur Herstellung von Polyurethan-basierten Lacken beschrieben sind, sind für die Herstellung von Schaumstoffen ungeeignet, da die Aminogruppen die Verschäumung in unerwünschter Weise katalysieren.

US 4,067,931 beschreibt Polyoxymethylendiphosphonsäuretetraalkylester als Flammschutzmittel für Polyurethanschaumstoffe. Diese Flammschutzmittel lassen sich jedoch nicht wirtschaftlich herstellen, da nach den Angaben von US 4,067,931 (Sp. 2, Z. 52 - 64) unter den als Ausgangsstoffe benötigten Trialkylphosphiten gerade die gut verfügbaren und kostengünstigen Stoffe Trimethylphosphit und Triethylphosphit schlecht für die Herstellung der Polyoxymethylendiphosphonsäuretetraalkylester geeignet sind.

Die in EP-A 0 690 890 als Flammschutzmittel für Polyurethanschaumstoffe beschriebenen Bisphosphonate sind ebenfalls wegen teurer Ausgangsmaterialien und/oder aufwändigen Herstellverfahren nicht wirtschaftlich herstellbar.

US 4,458,045 beschreibt Bisphosphonate, in denen die Phosphonsäureestergruppen in Dioxaphosphorinan-Ringe eingebunden sind, als Flammschutzmittel für Polyurethanschaumstoffe. Nachteilig an diesen Substanzen ist, dass alle in US 4,458,045 angegebenen Beispiele für derartige Bisphosphonate Feststoffe mit Schmelzpunkten von deutlich über 80 °C sind und damit die oben erwähnten dosiertechnischen Probleme mit sich bringen.

WO 2007/001717 A2 beschreibt als Flammschutzmittel für Polyurethanschaumstoffe unter anderem Bisphosphonate, die aus Diacrylaten bzw. Dimethacrylaten hergestellt werden. Nachteilig an dieser Substanzklasse ist die z. B. aus G. Borisov, V. Doseva und K. Todorov, Eur. Polym. J. 1988, 24, (8), S. 741 - 745 bekannte Schwierigkeit, bei ihrer Synthese die Bildung von Monophosphonaten zu vermeiden. Diese von Monoacrylaten bzw. Monomethacrylaten abgeleiteten Monophosphonate sind laut WO 2007/001717 A2 schlecht als Flammschutzmittel geeignet und müssen daher durch aufwändige Verfahren vermieden oder abgetrennt werden.

Lösungen im Sinne niedriger Foggingbeiträge bieten hydroxylgruppentragende, reaktive Phosphonate, wie beispielsweise Dimethyl-1-hydroxymethanphosphonat (EP 0 908 464 A1 = CA 2 246 634 A1) oder oligomere Hydroxyallcylphosphonate (DE 199 27 548 C2 = US 6,380,273). Diese reagieren mit dem zur Schaumherstellung eingesetzten Polyisocyanat und werden so in das Polyurethan eingebaut. Daher zeigen sie nur sehr geringe Fogging-Beiträge. Allerdings ist ihre Verarbeitung schwierig, da das für die Herstellung von Polyurethanschaumstoffen fein abgestimmte System bestehend aus Polyisocyanaten, Polyolen, Katalysatoren, Stabilisatoren, Treibmitteln, Zellregulatoren und gegebenenfalls weiteren Bestandteilen auf die Reaktivität des Flammschutzmittels abgestimmt werden muss. Diese Abstimmung macht arbeits- und zeitintensive Entwicklungsarbeiten notwendig. Darüber hinaus muss eine zusätzliche Menge an Polyisocyanat eingesetzt werden, was aus wirtschaftlichen Gründen unerwünscht ist.

Es ist Aufgabe der vorliegenden Erfindung, halogenfrei flammgeschützte Polyurethanschaumstoffe mit niedrigem Fogging zur Verfügung zu stellen, die gut verfügbare und einfach zu verarbeitende Flammschutzmittel beinhalten.

Diese Aufgabe wird gelöst durch flammgeschützte Polyurethanschaumstoffe, die als Flammschutzmittel halogenfreie, hydroxylgruppenfreie Bisphosphonate der allgemeinen Formel (I) 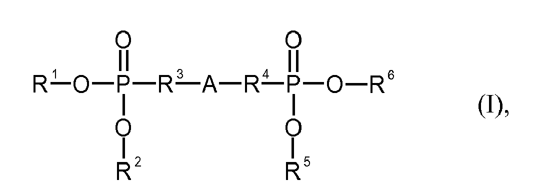 enthalten, worin
- R¹ und R²: jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
- R³ und R⁴: jeweils unabhängig voneinander für einen geradkettigen, verzweigten oder cyclischen C₂- bis C₈-Alkylenrest stehen,
- A: für O, S, S(=O), S(=O)₂, eine Gruppierung -O-(R⁷-O)ₐ-, worin a eine Zahl von 2 bis 10 ist, oder eine Gruppierung -O-(R⁸-O)_{b}-C(=O)-R⁹-C(=O)-O-(R¹⁰-O)_{c}-, worin b und c unabhängig voneinander eine Zahl von 0 bis 10 sind, steht,
- R⁵ und R⁶: jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
- R⁷, R⁸ und R¹⁰: jeweils unabhängig voneinander für einen geradkettigen, verzweigten oder cyclischen C₂- bis C₈-Alkylenrest stehen,
- R⁹: für einen geradkettigen, verzweigten oder cyclischen C₁- bis C₈-Alkylenrest, einen 1,2-, 1,3- oder 1,4-Phenylenrest, eine Gruppierung -CH=CH-, eine Gruppierung -O-(R¹¹-O)_{d}-, worin d eine Zahl von 1 bis 4 ist, eine Gruppierung -NH-R¹¹-NH- oder eine Gruppierung einer der Formeln (IIa) bis (IId) 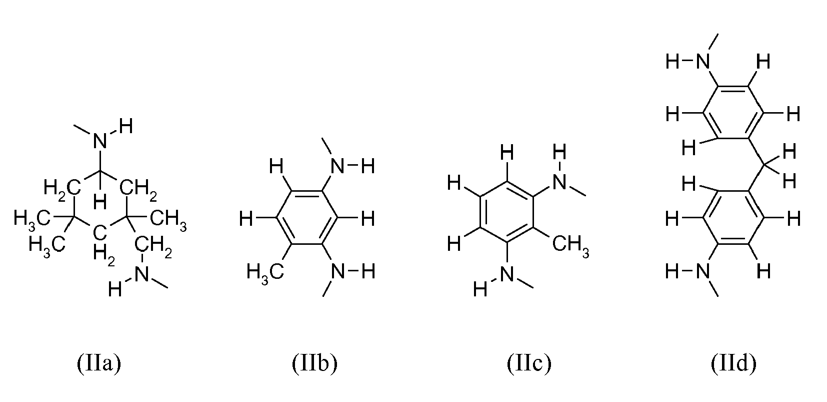 steht und
- R¹¹: für einen geradkettigen, verzweigten oder cyclischen C₂- bis C₈-Alkylenrest steht.

Der Begriff "halogenfrei" bedeutet, dass die Bisphosphonate die Elemente Fluor, Chlor, Brom und/oder Iod nicht enthalten. Der Begriff "hydroxylgruppenfrei" bedeutet, dass die Phosphonate keine an Kohlenstoffatome gebundenen OH-Gruppen tragen. Der Begriff "Bisphosphonate" bezeichnet organische Substanzen, die pro Molekül zwei Phosphonsäureestergruppen -P(=O)(OR)₂ enthalten.

In einer bevorzugten Ausführungsform sind R¹, R², R⁵ und R⁶ gleich und stehen entweder für Methyl oder für Ethyl.

In einer weiteren bevorzugten Ausführungsform sind R¹ und R² miteinander verknüpft sowie R⁵ und R⁶ miteinander verknüpft und stehen jeweils unabhängig voneinander für eine Gruppierung -CH₂-C(CH₃)₂-CH₂-, die zusammen mit den entsprechenden Sauerstoffatomen und dem Phosphoratom einen heterocyclischen Ring mit 6 Ringgliedern bildet.

In einer weiteren bevorzugten Ausführungsform sind R³ und R⁴ gleich und stehen entweder für -CH₂-CH₂- oder für -CH₂-CH₂-CH₂-.

In einer weiteren bevorzugten Ausführungsform steht A für eine Gruppierung -O-(CH₂-CH₂-O)ₐ-, worin a eine Zahl von 2 bis 4 ist.

In einer weiteren bevorzugten Ausführungsform sind b und c beide gleich 0.

In einer weiteren bevorzugten Ausführungsform steht R⁹ für einen geradkettigen C₄- bis C₆-Alkylenrest, einen 1,4-Phenylenrest, eine Gruppierung -NH-(CH₂)₆-NH- oder eine Gruppierung einer der oben genannten Formeln (IIb) oder (IIc).

In einer besonders bevorzugten Ausführungsform enthalten die erfindungsgemäßen Polyurethanschaumstoffe:
2-(2-[2- {2-Diethoxyphosphorylethyloxy}-ethyloxy]-ethyloxy)-ethanphosphonsäurediethylester, Formel (III) 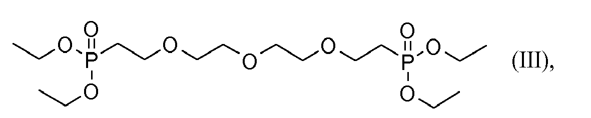
2-(2-[2- {2-(2-Dimethoxyphosphorylethyloxy}-ethyloxy)-ethyloxy]-ethyloxy)-ethanphosphonsäure-dimethylester, Formel (IV) 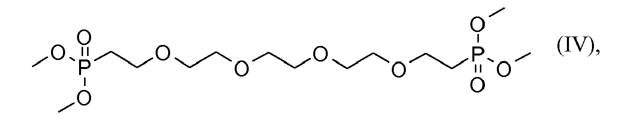
Adipinsäure-bis[3-(diethoxyphosphoryl)-1-propyl]-ester, Formel (V) 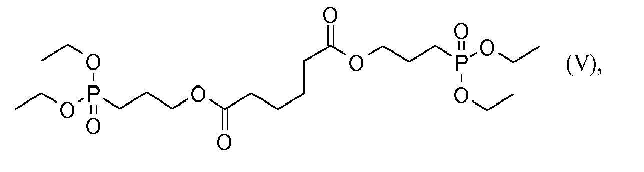
Terephthalsäure-bis[3-(dimethoxyphosphoryl)-1-propyl]-ester, Formel (VI) 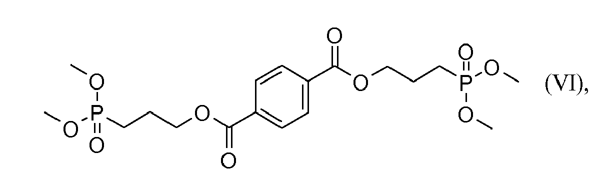
2-(6-[2- {Dimethoxyphosphoryl} -1-ethyloxycarbonylamino]-1-hexylaminocarbonyloxy)-ethanphosphonsäuredimethylester, Formel (VII) 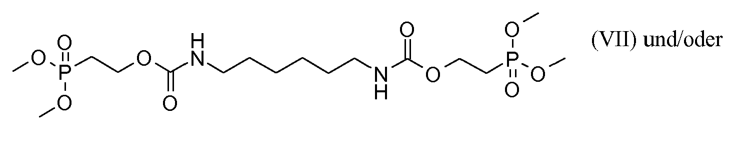
2-(4-[2- {Dimethoxyphosphoryl}1-ethyloxycarbonylamino]-2-toluylaminocarbonyloxy)-ethanphosphonsäuredimethylester, Formel (VIII)

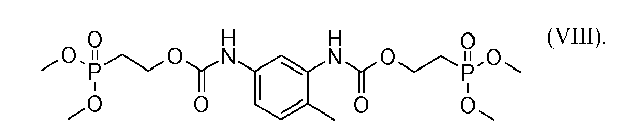

Bevorzugt handelt es sich bei den Bisphosphonaten der allgemeinen Formel (I) um bei Verarbeitungstemperatur flüssige Verbindungen. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Abhängigkeit der Viskositäten der Komponenten und Auslegung der Dosieraggregate Temperaturen zwischen 20 und 80 °C gewählt.

Bevorzugt sind die Bisphosphonate der allgemeinen Formel (I) gegenüber den anderen, zur Herstellung der Polyurethanschaumstoffe eingesetzten Ausgangsstoffen nicht reaktiv.

Die erfindungsgemäßen, flammgeschützten Polyurethanschaumstoffe werden hergestellt, indem man organische Polyisocyanate mit Verbindungen mit mindestens zwei gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von halogenfreien, hydroxylgruppenfreien Bisphosphonaten der allgemeinen Formel (I) umsetzt.

Die Bisphosphonate werden in einer Menge von 0,5 bis 30 Teilen, bevorzugt 3 bis 25 Teile, bezogen auf 100 Teile Polyolkomponente, eingesetzt.

Bei den Polyurethanschaumstoffen handelt es sich um Schaumstoffe auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Schaumstoffen auf Isocyanatbasis ist an sich bekannt und z. B. in DE-OS 16 94 142 (= GB 1 211 405), DE-OS 16 94 215 (= US 3,580,890) und DE-OS 17 20 768 (= US 3,620,986) sowie im Kunststoff-Handbuch Band VII, Polyurethane, herausgegeben von G. Oertel, Carl Hanser Verlag München, Wien 1993, beschrieben.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstrukur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 16 - 130 kg/m³ auf. Besonders bevorzugt weisen sie Raumgewichte von 20 - 40 kg/m³ auf.

Für die Herstellung der Schaumstoffe auf Isocyanatbasis werden folgende Ausgangskomponenten eingesetzt:
1. Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel Q(NCO)n, in der n = 2 bis 4, vorzugsweise 2 bis 3, und Q einen aliphatischen Kohlenwasserstoffrest mit 2 bis 18, vorzugsweise 6 bis 10 C- Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.
2. Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 (= US 4,263,408) und in EP 1 555 275 A2 (= US 2005 159 500) beschrieben werden. Die mindestens zwei Hydroxylgruppen aufweisenden Polyether und Polyester sind erfindungsgemäss bevorzugt.
   Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.
   Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 (= US 4,263,408) beschrieben.
3. Wasser und/oder leicht flüchtige Substanzen als Treibmittel, z. B. n-Pentan, i-Pentan, Cyclopentan, halogenhaltige Alkane, wie Trichlormethan, Methylenchlorid oder Chlorfluoralkane, Gase, wie CO₂ und andere. Auch eine Mischung mehrerer Treibmittel kann verwendet werden.
4. Gegebenenfalls werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kemverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292 = US 4,248,930). Als Kemverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel neben den Bisphosphonaten können in den Polyurethanschaumstoffen gegebenenfalls
a) organische Phosphorverbindungen, wie beispielsweise Triethylphosphat, Triphenylphosphat, Diphenylkresylphosphat, Trikresylphosphat, isopropylierte oder butylierte Arylphosphate, aliphatische oder aromatische Bisphosphate, Neopentylglycol-bis(diphenylphosphat), chlorhaltige Phosphorsäureester wie z.B. Tris(chlorpropyl)phosphat oder Tris(dichlorpropyl)phosphat, Dimethylmethanphosphonat, Diethylethanphosphonat, Dimethylpropanphosphonat, oligomere Phosphate oder Phosphonate, Hydroxylgruppenhaltige Phosphorverbindungen, 5,5-Dimethyl-1,3,2-dioxaphosphorinan-2-oxid-Derivate,
b) salzartige Phosphorverbindungen, wie beispielsweise Ammoniumphosphat, Ammoniumpolyphosphat, Melaminphosphat, Melaminpolyphosphat, Metallsalze von Dialkylphosphinsäuren, Metallsalze von Alkanphosphonsäuren,
c) Stickstoffverbindungen, wie beispielsweise Melamin, Melamincyanurat,
d) Chlor- und Bromverbindungen, wie beispielsweise Alkylester einer Tetrabrombenzoesäure, bromhaltige Diole hergestellt aus Tetrabromphthalsäureanhydrid, brom- und/oder chlorhaltige Polyole,
e) anorganische Flammschutzmittel, wie beispielsweise Aluminiumhydroxid, Boehmit, Magnesiumhydroxid, Blähgraphit oder Tonmineralien
enthalten sein.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabiliatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Gegenstand der vorliegenden Erfindung ist ferner ein Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Aktivatoren und/oder gegebenenfalls weiteren üblichen Hilfs- und Zusatzstoffen bei 20 bis 80 °C, dadurch gekennzeichnet, dass als Flammschutzmittel in einer Menge von 0,5 bis 30 Teilen, bezogen auf 100 Teile Polyolkomponente, halogenfreie, hydroxylgruppenfreie Bisphosphonate der allgemeinen Formel (I) 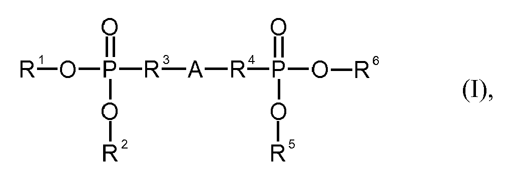 worin
- R¹ und R²: jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
- R³ und R⁴: jeweils unabhängig voneinander für einen geradkettigen, verzweigten oder cyclischen C₂- bis C₈-Alkylenrest stehen,
- A: für O, S, S(=O), S(=O)₂, eine Gruppierung -O-(R⁷-O)ₐ-, worin a eine Zahl von 2 bis 10 ist, oder eine Gruppierung -O-(R⁸-O)_{b}-C(=O)-R⁹-C(=O)-O-(R¹⁰-O)_{c}-, worin b und c unabhängig voneinander eine Zahl von 0 bis 10 sind, steht,
- R⁵ und R⁶: jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
- R⁷, R⁸ und R¹⁰: jeweils unabhängig voneinander für einen geradkettigen, verzweigten oder cyclischen C₂- bis C₈-Alkylenrest stehen,
- R⁹: für einen geradkettigen, verzweigten oder cyclischen C₁- bis C₈-Alkylenrest, einen 1,2-, 1,3- oder 1,4-Phenylenrest, eine Gruppierung -CH=CH-, eine Gruppierung -O-(R¹¹-O)_{d}-, worin d eine Zahl von 1 bis 4 ist, eine Gruppierung -NH-R¹¹-NH- oder eine Gruppierung einer der Formeln (IIa) bis (IId) 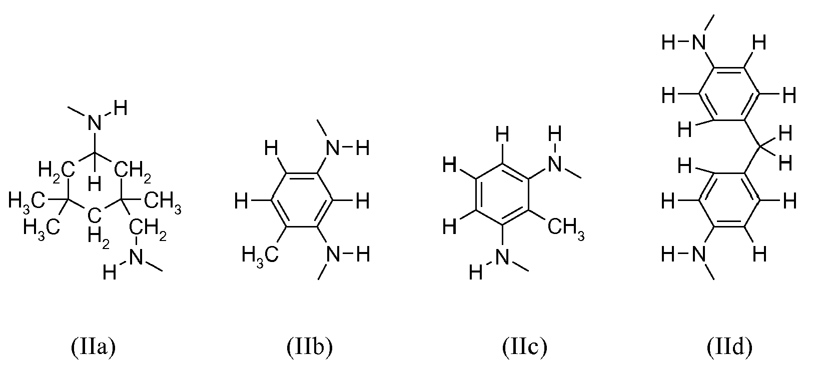 steht und
- R¹¹: für einen geradkettigen, verzweigten oder cyclischen C₂- bis C₈-Alkylenrest steht, eingesetzt werden.

In einer bevorzugten Ausführungsform des erfindungsgemäßen Verfahrens sind R¹, R², R⁵ und R⁶ gleich und stehen entweder für Methyl oder für Ethyl.

In einer weiteren bevorzugten Ausführungsform des erfindungsgemäßen Verfahrens sind R¹ und R² miteinander verknüpft sowie R⁵ und R⁶ miteinander verknüpft und stehen jeweils für eine Gruppierung -CH₂-C(CH₃)₂-CH₂-, die zusammen mit den entsprechenden Sauerstoffatomen und dem Phosphoratom einen heterocyclischen Ring mit 6 Ringgliedern bildet.

In einer weiteren bevorzugten Ausführungsform des erfindungsgemäßen Verfahrens sind R³ und R⁴ gleich und stehen entweder für -CH₂-CH₂- oder für -CH₂-CH₂-CH₂-.

In einer weiteren bevorzugten Ausführungsform des erfindungsgemäßen Verfahrens steht A für eine Gruppierung -O-(CH₂-CH₂-O)ₐ-, worin a eine Zahl von 2 bis 4 ist.

In einer weiteren bevorzugten Ausführungsform sind b und c beide gleich 0.

In einer weiteren bevorzugten Ausführungsform des erfindungsgemäßen Verfahrens steht R⁹ für einen geradkettigen C₄- bis C₆-Alkylenrest, einen 1,4-Phenylenrest, eine Gruppierung -NH-(CH₂)₆-NH- oder eine Gruppierung einer der oben genannten Formeln (IIb) oder (IIc).

In einer besonders bevorzugten Ausführungsform werden im erfindungsgemäßen Verfahren die folgenden Bisphosphonate eingesetzt:
2-(2-[2- {2-Diethoxyphosphorylethyloxy}-ethyloxy]-ethyloxy)-ethanphosphonsäurediethylester, Formel (III) 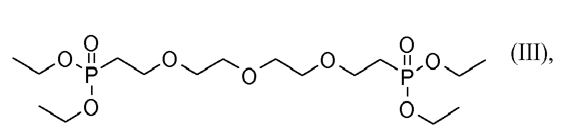
2-(2-[2- {2-(2-Dimethoxyphosphorylethyloxy}-ethyloxy)-ethyloxy]-ethyloxy)-ethanphosphonsäure-dimethylester, Formel (IV) 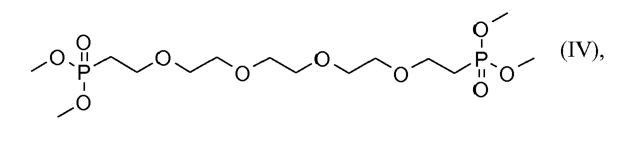
Adipinsäure-bis[3-(diethoxyphosphoryl)-1-propyl]-ester, Formel (V) 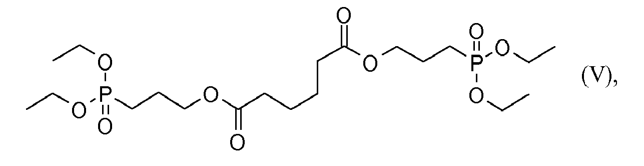
Terephthalsäure-bis[3-(dimethoxyphosphoryl)-1-propyl]-ester, Formel (VI) 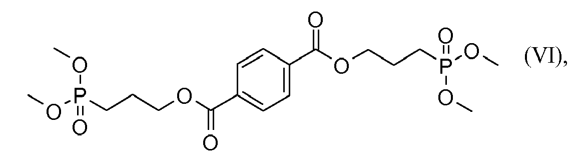
2-(6-[2- {Dimethoxyphosphoryl}-1-ethyloxycarbonylamino]-1-hexylaminocarbonyloxy)-ethanphosphonsäuredimethylester, Formel (VII) 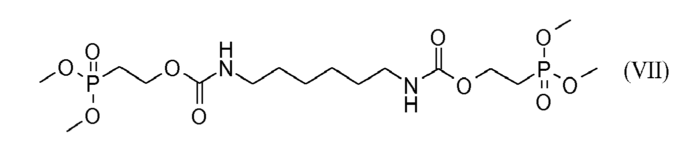 und/oder
2-(4-[2- {Dimethoxyphosphoryl}1-ethyloxycarbonylamino]-2-toluylaminocarbonyloxy)-ethan-phosphonsäuredimethylester, Formel (VIII)

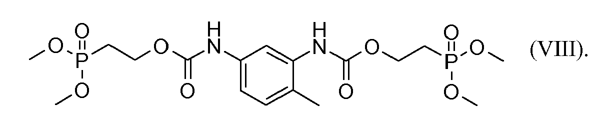

Durchführung des Verfahrens zur Herstellung von Polyurethanschaumstoffen:

Die oben beschriebenen Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäss in Frage kommen, werden im Kunststoff-Handbuch Band VII, Polyurethane, herausgegeben von G. Oertel, Carl Hanser Verlag München, Wien 1993, auf den Seiten 139 bis 192 beschrieben.

Erfindungsgemäß lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von flammgeschützten Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Produkte finden z. B. folgende Anwendung: Möbelpolsterungen, Textileinlagen, Matratzen, Sitze, bevorzugt Flugzeugsitze oder Automobilsitze, Armlehnen und Bauelemente sowie Sitz- und Armaturverkleidungen.

Die in den erfindungsgemäßen Polyurethanschaumstoffen enthaltenen beziehungsweise im erfindungsgemäßen Verfahren eingesetzten Bisphosphonate sind entweder bekannt oder lassen sich nach bekannten Methoden herstellen. Dabei kommen im industriellen Maßstab verfügbare Ausgangsmaterialien zum Einsatz, die in einem Schritt die gewünschten Endprodukte einfach herzustellen erlauben.

Verbindung (III), 2-(2-[2-{2-Diethoxyphosphorylethyloxy}-ethyloxy]-ethyloxy)-ethanphosphon-säurediethylester, ist bei Giulio Alberti, Ernesto Brunet, Chiara Dionigi, Olga Juanes, Maria José de la Mata, Juan Carlos Rodriguez-Ubis, und Riccardo Vivani, Angewandte Chemie, 1999, 111, S. 3548 - 3551, beschrieben und lässt sich nach dem dort angegebenen Verfahren aus Diethylenglycol und Diethylvinylphosphonat herstellen.

Verbindung (IV), 2-(2-[2-{2-(2-Dimethoxyphosphorylethyloxy}-ethyloxy)-ethyloxy]-ethyloxy)-ethanphosphonsäuredimethylester, lässt sich nach dem für Verbindung (III) beschriebenen Verfahren aus Triethylenglycol und Dimethylvinylphosphonat herstellen.

Verbindung (V), Adipinsäure-bis[3-(diethoxyphosphoryl)-1-propyl]-ester, ist in DE 1 145 171 (= US 2,989,562) beschrieben und lässt sich nach dem dort angegebenen Verfahren aus Diethylphosphit und Adipinsäurediallylester unter Verwendung von tert.-Butylperoctanoat herstellen.

Verbindung (VI), Terephthalsäure-bis[3-(dimethoxyphosphoryl)-1-propyl]-ester, lässt sich nach dem in DE 1 145 171 (= US 2,989,562) angegebenen Verfahren aus Dimethylphosphit und Terephthalsäurediallylester unter Verwendung von tert.-Butylperoctanoat herstellen.

Verbindung (VII), 2-(6- [2- {Dimethoxyphosphoryl}-1-ethyloxycarbonylamino]-1-hexylamino-carbonyloxy)-ethanphosphonsäuredimethylester, ist in DE 2 402 174 beschrieben und lässt sich nach dem dort angegebenen Verfahren aus 2-Hydroxyethanphosphonsäuredimethylester und 1,6-Hexandiisocyanat herstellen.

Verbindung (VIII), 2-(4- [2- {Dimethoxyphosphoryl}-1-ethyloxycarbonylamino]-2-toluylamino-carbonyloxy)-ethanphosphonsäuredimethylester, lässt sich nach dem in DE 2 402 174 angegebenen Verfahren aus 2-Hydroxyethanphosphonsäuredimethylester und 2,4-Toluylendiisocyanat herstellen.

Die Bisphosphonate sind unter den angegebenen Temperaturen zur Herstellung von Polyurethanschaumstoffen flüssig und somit gut zu dosieren. Sie reagieren nicht mit den anderen zur Herstellung der Polyurethanschaumstoffe eingesetzten Ausgangsstoffen und sind daher als Additive sehr leicht zu verarbeiten. Überraschender Weise lassen sich mit den Bisphosphonaten Schaumstoffe herstellen, die nicht nur den Anforderungen an den Flammschutz entsprechen, sondern auch besonders niedrige Foggingwerte zeigen.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Verwendete Materialien

| Komponente | Funktion | Beschreibung |
|---|---|---|
| A | Polyol | Arcol^{®} 1105 (Bayer MaterialScience), Polyetherpolyol mit OHZ 56 mg KOH/g |
| B | Treibmittel | Wasser |
| C | Katalysator | Niax^{®} A-1 (GE Silicones), 70 %ige Lösung von Bis(2-dimethylaminoethyl)ether in Dipropylenglykol |
| D | Katalysator | Desmorapid^{®} SO (Rheinchemie), Zinn-(II)-2-ethylhexanoat |
| E | Stabilisator | Tegostab^{®} B 8232 (Degussa), Siliconstabilisator |
| F1 | Flammschutzmittel | Tris(dichlorisopropyl)phosphat, TDCP, CAS Reg.-No. 13674-87-8 |
| F2 | Flammschutzmittel | Diphenylkresylphosphat, CAS Reg.-No. 26444-49-5 |
| F3 | Flammschutzmittel | Formel IV |
| F4 | Flammschutzmittel | Formel VI |
| F5 | Flammschutzmittel | Formel VII |
| F6 | Flammschutzmittel | Formel VIII |
| G | Diisocyanat | Desmodur^{®} T 80 (Bayer MaterialScience), Toluylendiisocyanat, Isomerenmischung |

### Herstellung von Polyurethanweichschaumstoffen

Die in Tabelle 1 nach Art und Menge angegebenen Komponenten mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 190 - 210 s wurde ein Polyurethanweichschaumstoff mit einem Raumgewicht von 32 kg/m³ erhalten.

### Bestimmung der Flammschutzwirkung

Die Polyurethanweichschaumstoffe wurden nach den Vorgaben des Federal Motor Vehicle Safety Standards FMVSS-302 getestet. Dabei wurden in einer horizontalen Halterung befestigte Schaumstoff-Probenkörper der Maße 210 mm x 95 mm x 15 mm (L x B x H) mittig an der kurzen Kante für 15 s mit einer 40 mm hohen Gasbrennerflamme entzündet und nach Entfernung der Zündflamme die Flammenausbreitung beobachtet. Je nachdem, ob und wie weit der Probenkörper weiterbrannte, wurde er den Brandklassen SE (selbsterlöschend, weniger als 38 mm der Probe angebrannt), SE/NBR (selbsterlöschend innerhalb von 60 s/keine Angabe der Brennrate), SE/B (selbsterlöschend/Brennrate messbar), BR (brennt bis zum Probenende, Brennrate messbar) und RB (schnell brennend, Brennrate nicht messbar) zugeordnet. Die Brandversuche wurden für jedes Beispiel fünfmal durchgeführt. Das schlechteste Ergebnis jeder Fünferreihe ist in Tabelle 1 wiedergegeben.

### Bestimmung des Foggings

Das Foggingverhalten der Polyurethanweichschaumstoffe wurde gemäß DIN 75201 B untersucht. Dabei wurden zylindrische Schaumstoff-Probenkörper der Maße 80 mm x 10 mm (∅ x H) für 16 h auf 100 °C erhitzt und die während dieser Zeit an einer auf 21 °C gekühlten, oberhalb der Probenkörper positionierten Aluminiumfolie niedergeschlagenen Kondensatmengen ausgewogen. Die gemessenen Kondensatmengen sind in Tabelle 1 wiedergegeben.

**Tabelle 1: Zusammensetzung (Teile) und Prüfergebnisse des erfindungsgemäßen Beispiele B1 bis B3 und der nicht erfindungsgemäßen Vergleichsbeispiele V1 bis V3**

| **Beispiel** | **V1** | **V2** | **V3** | **31** | **B2** | **B3** |
|---|---|---|---|---|---|---|
| A | 100 | 100 | 100 | 100 | 100 | 100 |
| B | 3,0 | 3,0 | 3,0 | 3,0 | 3,0 | 3,0 |
| C | 0,10 | 0,10 | 0,10 | 0,10 | 0,10 | 0,10 |
| D | 0,13 | 0,13 | 0,13 | 0,13 | 0,13 | 0,13 |
| E | 0,80 | 0,80 | 0,80 | 0,80 | 0,80 | 0,80 |
| F1 | | 6 | | | | |
| F2 | | | 6 | | | 2,2 |
| F3 | | | | 6 | | |
| F6 | | | | | 6 | |
| F7 | | | | | | 3,8 |
| G | 40,9 | 40,9 | 40,9 | 40,9 | 40,9 | 40,9 |
| MVSS-Klasse | RB | SE | BR | SE | SE | SE |
| Fogging-Kondensat [mg] | 0,28 | 0,66 | 0,84 | 0,47 | 0,22 | 0,62 |

### Ergebnisse

In Abwesenheit eines Flammschutzmittels (Vergleichsbeispiel V1) brennt der Polyurethanweichschaumstoff rasch ab (MVSS-Brandklasse RB), zeigt aber einen sehr niedrigen Foggingwert. Ein Schaumstoff mit Tris(dichlorisopropyl)phosphat (Vergleichsbeispiel V2) kann den von der Automobilindustrie geforderten Foggingwert von maximal 1 mg Kondensat einhalten und die beste MVSS-Brandklasse SE (selbsterlöschend) in allen Wiederholungen des Brandversuchs erreichen. Tris(dichlorisopropyl)phosphat bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V3) wird dieses Problem zwar umgangen und auch ein niedriger Foggingwert erreicht, aber die Flammschutzwirkung ist mit der MVSS-Brandklasse BR unzureichend.

Die Beispiele B1 bis B3 zeigen, dass sich die erfindungsgemäßen, halogenfreien Polyurethanweichschaumstoffe durch die beste Brandklasse SE (selbsterlöschend) in allen Wiederholungen des Brandversuchs und durch einen sehr niedrigen Foggingwert auszeichnen. Beispiel B3 zeigt, dass bereits geringe Einsatzmengen der erfindungsgemäßen Flammschutzmittel in Kombination mit dem herkömmlichen Flammschutzmittel Diphenylkresylphosphat eine Verbesserung der Flammschutzwirkung verursachen (vgl. mit Vergleichsbeispiel V3).

## Patentansprüche

1. Flammgeschützte Polyurethanschaumstoffe, die als Flammschutzmittel halogenfreie, hydroxylgruppenfreie Bisphosphonate der allgemeinen Formel (I) 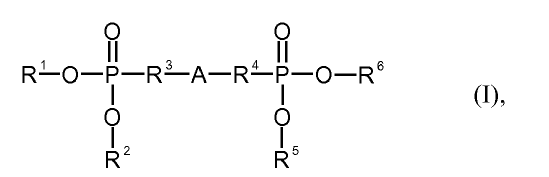 enthalten, worin
R¹ und R² jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen hetero-cyclischen, optional mit Alkylresten substituierten Ring mit mindestens 5 Ringgliedern stehen,
R³ und R⁴ jeweils unabhängig voneinander für einen geradkettigen, verzweigten oder cyclischen C₂- bis C₈-Alkylenrest stehen,
A für O, S, S(=O), S(=O)₂, eine Gruppierung -O-(R⁷-O)ₐ-, worin a eine Zahl von 2 bis 10 ist, oder eine Gruppierung -O-(R⁸-O)_{b}-C(=O)-R⁹-C(=O)-O-(R¹⁰-O)_{c}-, worin b und c unabhängig voneinander eine Zahl von 0 bis 10 sind, steht,
R⁵ und R⁶ jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
R⁷, R⁸ und R¹⁰ jeweils unabhängig voneinander für einen geradkettigen, verzweigten oder cyclischen C₂- bis C₈-Alkylenrest stehen,
R⁹ für einen geradkettigen, verzweigten oder cyclischen C₁- bis C₈-Alkylenrest, einen 1,2-, 1,3- oder 1,4-Phenylenrest, eine Gruppierung -CH=CH-, eine Gruppierung -O-(R¹¹-O)_{d}-, worin d eine Zahl von 1 bis 4 ist, eine Gruppierung -NH-R¹¹-NH- oder eine Gruppierung einer der Formeln (IIa) bis (IId) 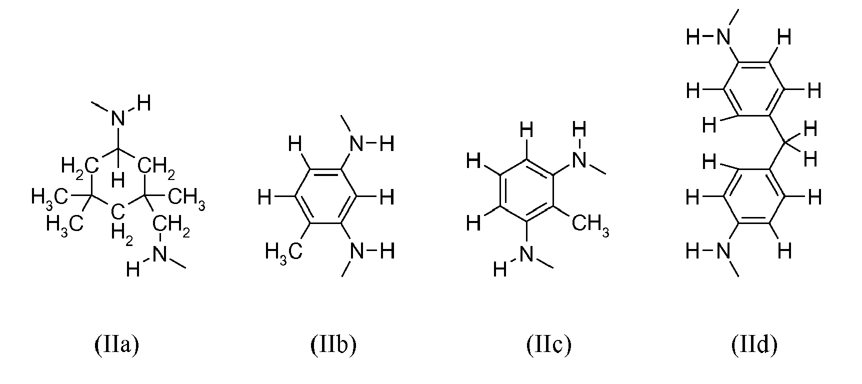 steht und
R¹¹ für einen geradkettigen, verzweigten oder cyclischen C₂- bis C₈-Alkylenrest steht.

2. Flammgeschützte Polyurethanschaumstoffe nach Anspruch 1, **dadurch gekennzeichnet, dass** R¹, R², R⁵ und R⁶ gleich sind und entweder für Methyl oder Ethyl stehen.

3. Flammgeschützte Polyurethanschaumstoffe nach Anspruch 1, **dadurch gekennzeichnet, dass** R¹ und R² miteinander verknüpft sind sowie R⁵ und R⁶ miteinander verknüpft sind und jeweils unabhängig voneinander für eine Gruppierung -CH₂-C(CH₃)₂-CH₂- stehen, die zusammen mit. den entsprechenden Sauerstoffatomen und dem Phosphoratom einen heterocyclischen Ring mit 6 Ringgliedern bildet.

4. Flammgeschützte Polyurethanschaumstoffe nach mindestens einem der Ansprüche 1 bis 3, **dadurch gekennzeichnet**, R₃ und R₄ gleich sind und entweder für -CH₂-CH₂- oder für -CH₂-CH₂-CH₂- stehen.

5. Flammgeschützte Polyurethanschaumstoffe nach mindestens einem der Ansprüche 1 bis 4, **dadurch gekennzeichnet, dass** A eine Gruppierung -O-(-CH₂-CH₂-O)ₐ- ist, worin a eine Zahl von 2 bis 4 ist.

6. Flammgeschützte Polyurethanschaumstoffe nach mindestens einem der Ansprüche 1 bis 4, **dadurch gekennzeichnet, dass** A eine Gruppierung -O-C(=O)-R⁹-C(=O)-O- ist, worin R⁹ ein geradkettiger C₄- bis C₆-Alkylenrest, ein 1,4-Phenylenrest, eine Gruppierung -NH-(CH₂)₆-NH- oder eine Gruppierung einer der Formeln (IIb) oder (IIc) bedeutet.

7. Flammgeschützte Polyurethanschaumstoffe nach mindestens einem der Ansprüche 1 bis 6, **dadurch gekennzeichnet, dass** es sich bei den Bisphosphonaten um bei der Verarbeitungstemperatur flüssige Verbindungen handelt.

8. Flammgeschützte Polyurethanschaumstoffe nach mindestens einem der Ansprüche 1 bis 7, **dadurch gekennzeichnet, dass** neben den Bisphosphonaten weitere bekannte Flammschutzmittel eingesetzt werden.

9. Flammgeschützte Polyurethanschaumstoffe nach mindestens einem der Ansprüche 1 bis 8, **dadurch gekennzeichnet, dass** es sich dabei um Weichschaumstoffe handelt.

10. Verfahren zur Herstellung von flammgeschützten Polyurethanschaumstoffen durch Umsetzung von organischen Polyisocyanaten mit Verbindungen mit mindestens zwei gegenüber Isocyanaten reaktionsfähigen Wasserstoffatomen und üblichen Treibmitteln, Stabilisatoren, Aktivatoren und/oder gegebenenfalls weiteren üblichen Hilfs- und Zusatzstoffen bei 20 bis 80 °C, **dadurch gekennzeichnet, dass** als Flammschutzmittel in einer Menge von 0,5 bis 30 Teilen, bezogen auf 100 Teile Polyolkomponente, halogenfreie, hydroxylgruppenfreie Bisphosphonate der allgemeinen Formel I 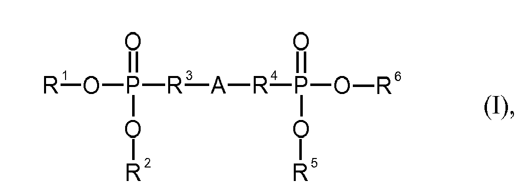 eingesetzt werden, worin
R¹ und R² jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
R³ und R⁴ jeweils unabhängig voneinander für einen geradkettigen, verzweigten oder cyclischen C₂- bis C₈-Alkylenrest stehen,
A für O, S, S(=O), S(=O)₂, eine Gruppierung -O-(R⁷-O)ₐ-, worin a eine Zahl von 2 bis 10 ist, oder eine Gruppierung -O-(R⁸-O)_{b}-C(=O)-R⁹-C(=O)-O-(R¹⁰-O)_{c}-, worin b und c unabhängig voneinander eine Zahl von 0 bis 10 sind, steht,
R⁵ und R⁶ jeweils unabhängig voneinander für einen Rest C₁- bis C₄-Alkyl oder C₁- bis C₄-Alkoxyethyl stehen oder miteinander verknüpft sind und mit den entsprechenden Sauerstoffatomen und dem Phosphoratom für einen heterocyclischen, optional mit Alkylresten substituierten Ring mit mindestens 5 Ringgliedern stehen,
R⁷, R⁸ und R¹⁰ jeweils unabhängig voneinander für einen geradkettigen, verzweigten oder cyclischen C₂- bis C₈-Alkylenrest stehen,
R⁹ für einen geradkettigen, verzweigten oder cyclischen C₁- bis C₈-Alkylenrest, einen 1,2-, 1,3- oder 1,4-Phenylenrest, eine Gruppierung -CH=CH-, eine Gruppierung -O-(R¹¹-O)_{d}-, worin d eine Zahl von 1 bis 4 ist, eine Gruppierung -NH-R¹¹-NH- oder eine Gruppierung einer der Formeln (IIa) bis (IId) 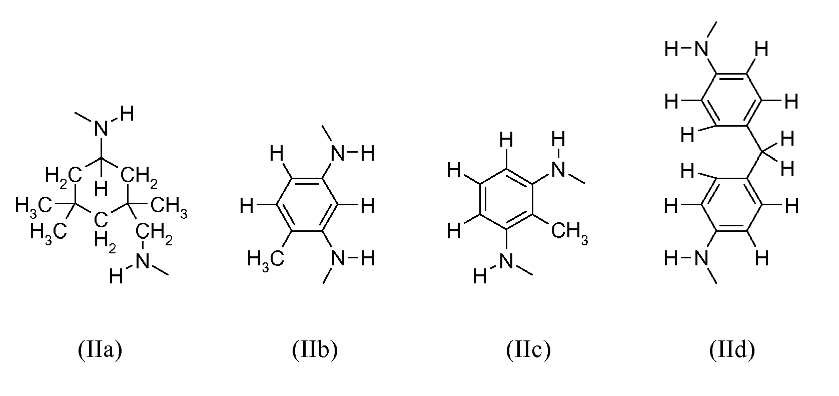 steht und
R¹¹ für einen geradkettigen, verzweigten oder cyclischen C₂- bis C₈-Alkylenrest steht.

11. Verwendung der Polyurethanschaumstoffe gemäß mindestens einem der Ansprüche 1 bis 9 in Möbelpolsterungen, Textileinlagen, Matratzen, Sitzen, Armlehnen, Bauelementen, sowie Sitz- und Armaturverkleidungen.
